# EUROPÄISCHE PATENTSCHRIFT

(11) **EP 1 531 919 B1**
(45) Veröffentlichungstag und Bekanntmachung des Hinweises auf die Patenterteilung: **10.10.2007**
(21) Anmeldenummer: 03792407.3
(22) Anmeldetag: 21.08.2003
(51) Int. Cl.: B01D 11/02

(54) **VERFAHREN ZUR GEWINNUNG EINER ÖLFRAKTION UND EINER EIWEISS-FRAKTION AUS EINER PFLANZLICHEN AUSGANGSSUBSTANZ**
METHOD FOR OBTAINING AN OIL FRACTION AND A PROTEIN FRACTION FROM A VEGETAL INITIAL SUBSTANCE
PROCEDE POUR EXTRAIRE UNE FRACTION LIPIDIQUE ET UNE FRACTION PROTEIQUE D'UNE SUBSTANCE DE DEPART VEGETALE

(30) Priorität: 22.08.2002 DE 10238404
(43) Veröffentlichungstag der Anmeldung: 25.05.2005
(73) Patentinhaber: NEUMÜLLER, Waldemar, D-37077 Göttingen (DE)
(72) Erfinder: NEUMÜLLER, Waldemar, D-37077 Göttingen (DE)
(74) Vertreter: Rehberg Hüppe + Partner
(86) Internationale Anmeldenummer: PCT/EP2003/009279
(87) Internationale Veröffentlichungsnummer: WO 2004/018069

(56) Entgegenhaltungen:
- DE-A- 1 467 499
- DE-A- 2 544 863
- GB-A- 654 002
- GB-A- 900 126
- GB-A- 901 110
- US-A- 4 089 848

## Beschreibung

Die Erfindung bezieht sich auf ein Verfahren zur Gewinnung einer Ölfraktion und einer Eiweißfraktion aus einer pflanzlichen Ausgangssubstanz. Zu diesem Zweck wird die zumindest in einer Dimension zerkleinerte Ausgangssubstanz extrahiert, um die Ölfraktion zu gewinnen. Die extrahierte Ausgangssubstanz wird anschließend aufbereitet, um die Eiweißfraktion zu gewinnen.

### STAND DER TECHNIK

Der zunehmend steigende Bedarf an nachwachsenden Rohstoffen, z.B. für die Gewinnung von Pflanzenöl, Stärke, Phytoöstrogenen, Vitaminen, natürlichen Farbstoffen, Proteinen und Fasern, hat zu einem Umdenken bei der Aufbereitung von pflanzlichen Ausgangssubstanzen geführt, die diese Wertstoffe enthalten. Es wird immer mehr darauf geachtet, die in den Rohstoffen enthaltenen Wertstoffe rückstandsfrei und vollständig zu gewinnen. Gleichzeitig wird auf eine hohe Reinheit und Schadstofffreiheit der gewonnenen Wertstoffe geachtet.

Die derzeit bei der Aufarbeitung von öl- und eiweißhaltigen pflanzlichen Rohstoffen eingesetzten Verfahren sind vielseitig und reichen von wässrigen Auszügen über die Alkoholextraktion bis hin zu Großanlagen für die Extraktion von Pflanzenöl mit Hexan. In der Regel steht hierbei bislang jedoch nur ein Wertstoff, der aus der jeweiligen pflanzlichen Ausgangssubstanz gewonnen wird, im Vordergrund der Aufarbeitung. Dies hat zur Folge, dass bei der Gewinnung des jeweiligen Wertstoffs häufig große Mengen an unverwertbarem Rückständen aus der pflanzlichen Ausgangssubstanz entstehen, die im günstigsten Fall als Tierfutter entsorgt werden, obwohl hier grundsätzlich noch ein großes Wertstoffpotential zu sehen ist.

Eine Ausnahme bildet die Gewinnung von Pflanzenöl mit Hilfe des Lösungsmittels Hexan. Bei diesem bekannten Verfahren, das ähnlich einer Soxhlet-Extraktion arbeitet, wird der Rückstand der Extraktion zum Teil so aufbereitet, dass hieraus zumindest ein weiterer Rohstoff gewonnen werden kann. Ein typisches Beispiel ist die Sojaölgewinnung. Hier werden die Reststoffe der Hexanextraktion, d.h. die Extraktionsschrote, entweder schonend zu sogenannten "white Flakes" oder weniger schonend zu sogenannten "toasted Flakes" getrocknet, d.h. desolventenisiert. Bei dieser Trocknung wird das nach der Extraktion noch in der Hexan-feuchten extrahierten Ausgangssubstanz vorhandene Lösungsmittel entweder durch Dampf oder durch Erhitzen ausgetrieben. Die white Flakes können dann zu Soja-Mehlen, zu Soja-Konzentraten oder zu Soja-Isolaten aufbereitet werden. Die Aufbereitung von toasted Flakes ist zwar grundsätzlich auch möglich, diese werden aber aufgrund des hohen Denaturierungsgrads der Eiweiße überwiegend als Tierfutter eingesetzt.

White Flakes können neben der unmittelbaren Verwendung in der Nahrungsmittelindustrie auch als Ausgangssubstanz für eine weitere Extraktion herangezogen werden. Bekannt ist die alkoholische Extraktion von white Flakes zur Gewinnung von Phytoöstrogenen (Isoflavonen). Die hierbei verbleibenden hexan- und alkoholextrahierten Rückstände werden als Tierfutter entsorgt, da die noch enthaltenen Fasern und Proteine soweit denaturiert sind, dass funktionelle Eigenschaften dieser Inhaltsstoffe nicht mehr gegeben sind. Die funktionellen Eigenschaften sind aber für den Einsatz von Fasern und Proteinen im Nahrungsmittelbereich Voraussetzung.

Bei der Pflanzenölgewinnung werden sehr große Mengen nachwachsender Rohstoffe verarbeitet. Obwohl die heute eingesetzten Verfahren ausgereift sind, besteht aber ein gewisser Nachteil gerade darin, dass nur sehr große Einheiten wirtschaftlich betrieben werden können. So verarbeitet die kleinste, gerade noch wirtschaftlich arbeitende Anlage zur Herstellung von Sojaöl durch Hexan-Extraktion 120 Tonnen Soja-Ausgangssubstanz am Tag. Anlagen mit einer Kapazität von einigen tausend Tonnen am Tag sind noch effektiver und werden daher in der Praxis eingesetzt. Eine solche Verarbeitungskapazität ist aber nur dann nutzbar, wenn mit den gewonnenen Rohstoffen ein internationaler Markt bedient werden kann. Dies ist aber insbesondere bei neuen Produkten und für Erstanbieter am Markt nicht realistisch.

Die vorliegende Erfindung befasst sich vor diesem Hintergrund mit der Problematik, ein Verfahren der eingangs beschriebenen Art aufzuzeigen, das zwar im industriellen Maßstab wirtschaftlich einsetzbar ist, aber auch für kleinere Anlagen mit einer Kapazität von 120 Tonnen Ausgangssubstanz und weniger am Tag.

Obwohl das Lösungsmittel Hexan in der Pflanzenölextraktion nicht unumstritten ist, werden andere geeignete Extraktionsmittel, wie beispielsweise Alkohole, derzeit nicht industriell eingesetzt. Zwar könnte die Technik der Hexan-Extraktion entsprechen, doch würde der Alkohol bei dieser Extraktion die in der Ausgangssubstanz enthaltenen Proteine und Fasern noch stärker denaturieren als Hexan. Damit wäre eine weitere Verwendung und Aufbereitung der extrahierten Ausgangssubstanzen stark eingeschränkt, was die Wirtschaftlichkeit der Extraktion ungünstig beeinflusst.

Es ist allerdings bekannt, Alkohol nach oder in bestimmten Verfahren auch während der Hexan-Extraktion als zusätzliches Extraktionsmittel einzusetzen. So wird bei der Produktion von Sojakonzentraten ein Alkohol-Wasser-Gemisch genutzt, um Flatulenz-fördernde lösliche Zucker aus den white Flakes auszuwaschen. Die dabei eingesetzten Alkoholkonzentrationen sind aber grundsätzlich zu gering, um auch Öle oder Lipide quantitativ zu extrahieren, weshalb dieser Verfahrensschritt der Ölextraktion mit Hexan nachgeschaltet ist. Zudem werden erwartungsgemäß durch die alkoholische Extraktion Proteine in den White Flakes denaturiert, was sich in einer geringen Funktionalität der so behandelten Eiweißkonzentrate gegenüber den Mehlen oder Isolaten, die ohne eine solche Waschung erhalten werden, niederschlägt.

Der Einsatz von Isopropanol zusammen mit Hexan und überkritischer Kohlensäure ist aus der US 200 10 14750 A bekannt. Hier wird mit diesem Lösungsmittelgemisch Mais zur Ölgewinnung extrahiert. Wie es auch bei der Sojaextraktion mit reinem Hexan üblich ist, wird die Ausgangssubstanz vor der Extraktion zu dünnen Flocken gewalzt, die dann im Gegenstrom zu dem Lösungsmittel geführt werden. Das Walzen der Ausgangssubstanz zu Flocken entspricht einer Zerkleinerung der Ausgangssubstanz in einer Dimension, nämlich der Dicke der Flocken.

Aus der US 6,265,593 ist es bekannt, gleichzeitig Alkohol und Hexan zur Extraktion von Öl aus einer pflanzlichen Ausgangssubstanz einzusetzen. Das Besondere hierbei soll sein, dass in einem wässrigen System gearbeitet werden kann, während klassische Hexan-Extraktionsverfahren den Einsatz von Wasser gezielt vermeiden. Als nachteilig ist aber zu sehen, dass eine Trennung der beiden organischen Lösungsmittel Hexan und Alkohol höhere Kosten verursacht als die Aufarbeitung eines reinen Lösungsmittels, um das Pflanzenöl von der Extraktionslösung abzutrennen. Aufgrund des Einsatzes von Hexan muss auch der Rückstand der Extraktion, d.h. die extrahierte Ausgangssubstanz lösungsmittelfrei gemacht werden, was eine Desolventinisierung zwingend erforderlich macht. In Anbetracht des Wasseranteils bei der Extraktion ist dieser Vorgang aufwendig und verlangt viel Energie.

US 4,089,848 offenbart auch ein Verfahren, in welchem gleichzeitig Alkohol und Hexan zur Extraktion von Öl aus pflanzlichem Material eingesetzt wird.

Aus der GB 654,002 ist bekannt, pflanzliche Substanzen mit Hexan zu extrahieren und dann unter Zugabe von Wasser ein Zwei-Phasen-System zu bilden. Danach wird die Lösung erhitzt, um das Lösungsmittel aus der wäßrigen Phase zu verdampfen; die Feststoffe werden aus dieser wäßrigen Phase abgetrennt und schließlich werden die gewünschten Produkte mit Hilfe eines Fällungsmittels erhalten

Ein aus der US 200 10 56181 A bekanntes Verfahren arbeitet mit mehreren Alkohol-Extraktionsstufen im Bereich einer Alkoholkonzentration von 40 bis 80 %. Von Extraktionsstufe zu Extraktionsstufe steigt die Alkoholkonzentration an. Das Verfahren ist aufgrund einer Extraktionszeit von mehreren Stunden für eine großtechnische Anwendung kaum geeignet.

### AUFGABE DER ERFINDUNG

Der Erfindung liegt die Aufgabe zugrunde, ein Verfahren der eingangs beschriebenen Art aufzuzeigen, bei dem neben einer industriellen Anwendbarkeit auch in Anlagen mittlerer Größenordnung, s. oben, sowohl eine hochwertige Ölfraktion als auch eine hochwertige Eiweißfraktion mit guten funktionellen Eigenschaften der Eiweiße gewonnen wird.

### LÖSUNG

Erfindungsgemäß wird diese Aufgabe durch ein Verfahren mit den Merkmalen des Patentanspruchs 1 gelöst. Vorteilhafte Ausführungsformen des neuen Verfahrens sind in den Unteransprüchen 2 bis 10 dargelegt.

### BESCHREIBUNG DER ERFINDUNG

Bei dem erfindungsgemäßen Verfahren, das zur Extraktion von Ölen aus der pflanzlichen Ausgangssubstanz mit Alkohol arbeitet, kann überraschenderweise eine zuweit reichende Denaturierung von Proteinen aber auch von Fasern in der extrahierten Ausgangssubstanz vermieden werden, indem eine Trocknung der Alkohol-feuchten extrahierten Ausgangssubstanz direkt nach der Alkohol-Extraktion vermieden wird. Das Überführen der noch Alkohol-feuchten extrahierten Ausgangssubstanz in eine wässrige Suspension, wobei der Alkoholgehalt der extrahierten Ausgangssubstanz auf unter 5 % reduziert wird, beseitigt das größte Denaturierungspotential des Alkohols, welches dieser tatsächlich nicht bei der eigentlichen Extraktion sondern bei der Trocknung der extrahierten Ausgangssubstanz entwickelt. Wenn die extrahierte Ausgangssubstanz im Alkoholgehalt heruntergefahren ist, kann sie auf verschiedene Weise weiterverarbeitet werden.

Um bei dem neuen Verfahren die Denaturierung durch den Alkohol, der zur Extraktion der Öle eingesetzt wird, weiter zu begrenzen, wird die Ausgangssubstanz zu einem Mehl mit Partikelgrößen im Bereich von 10 bis 260 µm, vorzugsweise von 50 bis 150 µm zerkleinert. Bei einem Mehl mit diesen Partikelgrößen ist die relative Oberfläche, über die die Extraktion der Öle erfolgt, deutlich größer als bei den Flakes, welche üblicherweise mit Hexan extrahiert werden. Im Ergebnis kann damit die Extraktionsdauer bei dem neuen Verfahren verkürzt werden. Dies bedeutet automatisch eine weitere Reduktion des Denaturierungspotentials des Alkohols. Es versteht sich, dass ein Mehl mit Partikelgrößen in dem genannten Bereich andere Behandlungstechniken bei der Extraktion erfordert als vergleichsweise viel größere Flakes. Durch industriell einsetzbare Trenntechniken wird daher eine untere Grenze für die sinnvolle Partikelgröße des Mehls gesetzt. Das Mehl muss von dem extrahierenden Alkohol und dem mit diesem extrahierten Ölen abtrennbar bleiben. Dies kann beispielsweise mit Hilfe von Industriezentrifugen oder Filterpressen erfolgen.

Ein bevorzugter Alkohol für die alkoholische Extraktion der Ausgangssubstanz ist Isopropanol. Dieser Alkohol ist wirtschaftlich einsetzbar und grundsätzlich nicht mit den Vorbehalten im Lebensmittelbereich verbunden wie Hexan.

Eine weitere Einflussmöglichkeit auf das Denaturierungspotential des Alkohols besteht in der Temperaturführung der Extraktion. Mit steigender Temperatur steigt das Denaturierungspotential des Alkohols. Umgekehrt ist es aber so, dass mit steigender Temperatur die Extraktionsfähigkeit des Alkohols ebenfalls zunimmt. Als Kompromiss zwischen diesen beiden Gesichtspunkten ergibt sich ein Temperaturbereich von 40 bis 70 °C für die alkoholische Extraktion. Besonders bevorzugt ist ein Temperaturbereich von 50 bis 60 °C, d.h. von etwa 55 °C.

Letztlich ist es auch entscheidend, wie hoch die Alkoholkonzentration bei der Extraktion ist. Um eine gute Ölausbeute zu erzielen, muss diese mindestens 60 % betragen. Vorzugsweise liegt sie deutlich über 80 %. Auch im industriellen Maßstab ist eine Alkoholkonzentration von über 85 % bei der alkoholischen Extraktion realistisch und bevorzugt.

Um das Denaturierungspotential des Alkohols mit seinem Austausch durch Wasser vollständig zu beseitigen, sollte die extrahierte Ausgangssubstanz mit Wasser solange gewaschen werden, bis ihr Alkoholgehalt kleiner als 2 % ist. Vorzugsweise wird er unter 1 % abgesenkt. Auch bei der Waschung der extrahierten Ausgangssubstanz sind ihre relativ kleinen Partikelgrößen von Vorteil, weil damit relativ große Austauschoberflächen zur Verfügung stehen. Während des Reduzierens des Alkoholgehalts der extrahierten Ausgangssubstanz mit Wasser sollte der pH-Wert der wässrigen Suspension zwischen 4 und 5, d.h. im Bereich des isoelektrischen Punkts der in der Ausgangssubstanz enthaltenen Proteine, liegen. Hierdurch wird ein an dieser Stelle ungewolltes in Lösung gehen der Proteine verhindert.

Die bei dem erfindungsgemäßen Verfahren noch auftretenden Denaturierungen durch den Alkohol können durch eine alkalische Behandlung zumindest im Wesentlichen wieder beseitigt werden. Diese alkalische Behandlung erfolgt an der im Alkoholgehalt bereits reduzierten Ausgangssubstanz. Hierzu sind pH-Werte im Bereich von 9 bis 10 besonders geeignet. Als Unterstützung der alkalischen Behandlung ist eine Homogenisation der Ausgangssubstanz beispielsweise durch Hochdruckdesintegration sinnvoll.

Die Erwärmung des Alkohols für die Extraktion kann mit einem Wärmetauscher erfolgen, der die benötigte Wärme an einer anderen Stelle des Verfahrens zur Abkühlung der Verfahrensprodukte entzieht. Bei der Erwärmung der Ausgangssubstanz ist darauf zu achten, dass es zu keiner Hitzedenaturierung der enthaltenen Proteine kommt, die diese an die Fasermatrix der Ausgangssubstanz anbindet.

Durch die geringe Partikelgröße können bei dem neuen Verfahren Extraktionszeiten von unter 60 min., konkret sogar von unter 30 min. , d.h. etwa 15 min., erreicht werden. Am Ende der Extraktion wird die alkoholische Suspension in die alkoholische Flüssigphase und die extrahierte Ausgangssubstanz getrennt. Dies erfolgt bevorzugt durch eine Kammerfilterpresse, die ein Nachwaschen des Rückstands noch innerhalb der Filtration erlaubt. Je nach Extraktionsergebnis kann die alkoholische Extraktion aber auch vollständig wiederholt werden. In der Regel ist eine einstufige Extraktion mit Nachwaschung oder eine zweistufige Extraktion ausreichend. Bei der Anwendung von Zentrifugieren als Trenntechnik sind sinnvoller Weise mehrere Zentrifugen in Form eines sogenannten Dekanters hintereinander zu schalten.

Die extrahierten Inhaltsstoffe, also insbesondere Öle, können dadurch isoliert werden, dass der Alkohol beispielsweise über einen Dünnschichtverdampfer abdestilliert wird. Er kann dann erneut der Extraktion zugeführt werden. Das nach dem Abdestillieren des Alkohols angefallene Konzentrat kann nach bekannten Verfahren raffiniert und zur Zerlegung in seine Bestandteile weiter aufbereitet werden.

Die extrahierten Ausgangsstoffe quellen in der wässrigen Suspension, in die sie zur Reduzierung ihres Alkohols überführt werden. Dabei weist eine Quellung mit einer Volumenzunahme um den Faktor 1,4 bis 2 auf einen Erfolg des neuen Verfahrens hin, d.h. auf nur geringe Denaturierungen der Proteine durch den eingesetzten Alkohol.

Grundsätzlich kann eine Quellung der Partikel der Ausgangssubstanz auch zu Beginn des neuen Verfahrens durch Wasserzugabe ausgelöst werden. Eine erst anschließende Erhöhung des Alkoholgehalts für die Extraktion ist aber aufwändiger und daher in der Regel nicht bevorzugt.

Die im Alkoholgehalt reduzierte Ausgangssubstanz kann unmittelbar getrocknet und als entöltes, hochproteinhaltiges Mehl verwendet werden.

Dabei ist es bevorzugt, wenn die im Alkoholgehalt reduzierte Ausgangssubstanz vor ihrer Trocknung in wässriger Suspension neutralisiert und homogenisiert wird. Die Neutralisierung erfolgt aus dem Sauren, wenn keine alkalische Renaturierung der Proteine erfolgt bzw. aus dem alkalischen, falls eines solche alkalische Renaturierung der Proteine vorgesehen ist.

Zur Gewinnung von Proteinisolaten kann die im Alkoholgehalt reduzierte Ausgangssubstanz alkalisch extrahiert werden, wobei eine alkalische Flüssigphase von den verbleibenden Feststoffen abgetrennt wird und die alkalische Flüssigphase aufbereitet wird, um die Eiweißfraktion zu gewinnen. Die verbleibenden Feststoffe können hingegen aufbereitet werden, um eine Faserfraktion zu gewinnen. Diese Faserfraktion kann beispielsweise als Ballaststoff im Lebensmittelbereich eingesetzt werden. Für die sensorischen Eigenschaften dieses Ballaststoffs kann es sinnvoll sein, eine Saat, die die pflanzliche Ausgangssubstanz des neuen Verfahrens bildet, vor ihrem Vermahlen zu einem Mehl zu schälen. Ansonsten ist ein solches Schälen kein notwendiger Schritt des neuen Verfahrens, weil die ebenfalls zu dem Mehl vermahlenen Schalen keinen der Verfahrensschritte in seinem Erfolg behindern.

### AUSFÜHRUNGSBEISPIELE

Die Erfindung wird im Folgenden anhand von Ausführungsbeispielen näher erläutert und beschrieben.

### Verarbeitung von Lupinensaat

100 kg geschälte Lupinensaat wird auf 80 bis 150 µm vermahlen und unter Rühren mit 200 kg Isopropanol versetzt, so dass sich eine Feststoffkonzentration von 30 % ergibt. Diese Suspension wird auf 55 °C erwärmt. Nach 10 min. Rührzeit wird die Suspension einer Filterpresse zugeführt. Nachdem die Kammern gefüllt sind, wird mit weiterem Isopropanol von 55 °C nachgewaschen. Dann wird durch Erhöhung des Filtrationsdrucks ein Trockensubstanzgehalt von mindestens 60 % eingestellt. Insgesamt ist die Menge an Isopropanol für die Nachwäsche so zu wählen, dass nach Erhöhung des Filtrationsdrucks 200 kg Isopropanol für die Aufnahme von neuem Mehl zur Verfügung stehen. D.h., der während der Wäsche anfallende Extrakt wird zur Aufnahme von neuem Mehl verwendet. Demgegenüber wird der Extrakt vor der Wäsche einer Rektifikation zur Trennung des Isopopanols von den extrahierten Ölen zugeführt.

Nach Erreichen der angestrebten Trockensubstanz von mindestens 60 % wird der Rückstand aus der Filterpresse in eine Vorlage mit Wasser überführt und unter Rühren von Säure auf pH 4,5 eingestellt. Dies ist der isoelektirsche Punkt der in der Lupinensaat enthaltenen Proteine. Der Feststoffgehalt der wässrigen Suspension wird auf 15 % eingestellt. Zur Entfernung der in der Alkohol-extrahierten Ausgangssubstanz noch enthaltenen löslichen Zucker wird diese Suspension unter Aufrechterhaltung des pH-Werts von 4,5 abzentrifugiert. Dieser Vorgang wird so lange wiederholt bis der Alkoholgehalt des Rückstands der Zentrifugation unter 1 % abgesunken ist. Hiermit werden bezogen auf die Trockensubstanz folgende Daten erreicht: Ölgehalt kleiner 1 %; Eiweißgehalt größer 70 %; lösliche Kohlenhydrate kleiner 1 %; Mineralstoffe kleiner 2 %; Alkaloide kleiner 20 ppm. Der Verbrauch an Isopropanol vor der Rektifikation beträgt etwa 2 kg pro kg geschälter Saat.

Zur Herstellung eines Lupinen-Eiweiß-Konzentrats wird nach der alkoholischen Extraktion und der Absenkung des Alkoholgehalts der pH-Wert der Suspension der extrahierten Ausgangssubstanz auf 7,5 angehoben. Dann wird über eine Druckdifferenz von 100 bar mit einem Hochdruckdesintegrator homogenisiert. Dabei sinkt der pH-Wert bis zu einer pH-Einheit. Die so homogenisierte entölte Ausgangssubstanz wird durch Sprühtrocknung getrocknet. Dieses Material weist gegenüber den bekannten Alkohol-extrahierten Substanzen eine höhere Wasserbindung und eine verbesserte Emulgieraktivität auf. Der bekannte Lupinen-Eigengeschmack ist nicht zu bemerken. Vielmehr hat das Verfahrensprodukt einen neutralen Geschmack.

Zur Gewinnung von Lupinen-Eiweiß-Isolat anstelle von Lupinen-Eiweiss-Konzentrat wird statt der Sprühtrocknung der pH-Wert der homogenisierten Suspension mittels Zugabe von Lauge auf 9 eingestellt, und in der Folge werden die Proteine alkalisch in Lösung gebracht. Die gelösten Proteine werden von der Feststofffraktion abgetrennt und nach bekanntem Verfahren gefällt und getrocknet. Die Feststofffraktion kann zu Ballaststoffen für den Lebensmittelbereich aufbereitet werden. Die alkalische Extraktion der Proteine kann in bekannter Weise auch im Gegenstromverfahren erfolgen und/oder unter dem Einsatz von Proteasen.

### Verarbeitung von Soja-Bohnen

100 kg Soja-Bohnen werden ohne Entfernung der Schalenbestandteile direkt auf 50 µm bis 80 µm vermahlen und mit 260 kg Isopropanol versetzt (25 % Trockensubstanz). Diese Suspension wird auf 55 °C erwärmt. Nach 15 min. Rührzeit wird die Suspension einer Dekantierzentrifuge zugeführt und mit 3.500 xg abzentrifugiert. Der Feststoffaustrag weist einen Feststoffanteil von ca. 40 % auf und wird in neuem Isopropanol so aufgenommen, so dass eine Feststoffkonzentration von 20 % entsteht. Nach Erwärmen auf 55 °C wird wiederum mit 3.500 xg abzentrifugiert. Dieser Vorgang wird noch zweimal wiederholt, wobei der Feststoffaustrag von 40 auf ca. 45 % ansteigt. Dabei wird das Isopropanol im Gegenstrom zum Feststoff geführt. Der Extrakt der ersten Zentrifugation wird der Rektifikation zugeführt. Frisches Isopropanol wird vor der vierten Zentrifugation zugegeben. Der Ablauf der zweiten Zentrifugation wird neuem Mehl zugeführt, um die Suspension vor der ersten Zentrifugation bereitzustellen. Nach der vierten Zentrifugation wird der ausgetragene Feststoff in eine Vorlage mit Wasser überführt und unter Rühren mit Säure auf pH 4,5 eingestellt. Der Feststoffgehalt der wässrigen Suspension wird dabei auf 15 % eingestellt. Zur Entfernung der noch enthaltenen löslichen Zucker wird diese Suspension unter Aufrechterhaltung des pH-Werts von 4,5 abzentrifugiert. Der Vorgang wird solange wiederholt, bis der Alkoholgehalt unter 1 % liegt. Folgende durchschnittliche Daten treffen auf die Trockensubstanz der so erreichbaren Suspension zu: Ölgehalt kleiner 1 %; Eiweißgehalt größer 70 %; lösliche Kohlenhydrate kleiner 1 %; Mineralstoffe kleiner 2 %; Alkaloide kleiner 20 ppm. Der Verbrauch an Isopropanol beträgt bei diesem Verfahrensbeispiel vor der Rektifikation 4 kg pro kg ungeschälter Sojabohnen. Die weitere Aufbereitung der im relativen Alkoholgehalt reduzierten Suspension kann analog den vorangehenden Beispielen erfolgen.

## Patentansprüche

1. Verfahren zur Gewinnung einer Ölfraktion und einer Eiweißfraktion aus einer pflanzlichen Ausgangssubstanz, mit den Schritten:
- Extrahieren der zerkleinerten Ausgangssubstanz mit Alkohol, wobei der Alkoholgehalt bei der Extraktion mindestens 60 % beträgt und Trennen einer alkoholischen Flüssigphase von der extrahierten Ausgangssubstanz;
- Aufbereiten der alkoholischen Flüssigphase durch Abdestillieren des Alkohols, um die Ölfraktion zu gewinnen;
- Vermeiden einer Trocknung der Alkohol-feuchten extrahierten Ausgangssubstanz direkt nach der Alkohol-Extraktion;
- Überführen der noch Alkohol-feuchten extrahierten Ausgangssubstanz in eine wässrige Suspension, um den Alkoholgehalt der extrahierten Ausgangssubstanz auf unter 5% zu reduzieren; und
- Aufbereiten der wässrigen Suspension durch alkalische Extraktion, um die Eiweißfraktion zu gewinnen.

2. Verfahren nach Anspruch 1, **dadurch gekennzeichnet, dass** die Ausgangssubstanz zu einem Mehl mit Partikelgrößen im Bereich von 10 bis 250 µm, vorzugsweise von 50 bis 150 µm, zerkleinert wird.

3. Verfahren nach einem der Ansprüche 1 und 2, **dadurch gekennzeichnet, dass** die Ausgangssubstanz mit Isopropanol alkoholisch extrahiert wird.

4. Verfahren nach einem der Ansprüche 1 bis 3, **dadurch gekennzeichnet, dass** die Ausgangssubstanz bei 40 bis 70 °C, vorzugsweise 50 bis 60 °C, alkoholisch extrahiert wird

5. Verfahren nach einem der Ansprüche 1 bis 4, **dadurch gekennzeichnet, dass** der Alkoholgehalt bei der Extraktion mehr als 80 % beträgt.

6. Verfahren nach einem der Ansprüche 1 bis 5, **dadurch gekennzeichnet, dass** die extrahierte Ausgangssubstanz mit Wasser gewaschen wird, bis ihr Alkoholgehalt kleiner als 2 %, vorzugsweise kleiner als 1 %, ist.

7. Verfahren nach einem der Ansprüche 1 bis 6, **dadurch gekennzeichnet, dass** der pH-Wert beim Reduzieren des Alkoholgehalts der extrahierten Ausgangssubstanz mit Wasser am isoelektrischen Punkt der Eiweißfraktion, insbesondere zwischen 4 und 5, liegt.

8. Verfahren nach einem der Ansprüche 1 bis 7, **dadurch gekennzeichnet, dass** die im Alkoholgehalt reduzierte Ausgangssubstanz, vorzugsweise bei einem pH-Wert im Bereich von 9 bis 10 und unter Homogenisation der Ausgangssubstanz, alkalisch behandelt wird.

9. Verfahren nach einem der Ansprüche 1 bis 8, **dadurch gekennzeichnet, dass** die im Alkoholgehalt reduzierte Ausgangssubstanz getrocknet wird, wobei die im Alkoholgehalt reduzierte Ausgangssubstanz vor ihrer Trocknung in wässriger Suspension neutralisiert und homogenisiert wird

10. Verfahren nach einem der Ansprüche 1 bis 8, **dadurch gekennzeichnet, dass** die im Alkoholgehalt reduzierte Ausgangssubstanz alkalisch extrahiert wird, wobei eine alkalische Flüssigphase von den verbleibenden Feststoffen abgetrennt und die alkalische Flüssigphase aufbereitet wird, um die Eiweißfraktion zu gewinnen, wobei die verbleibenden Feststoffe insbesondere aufbereitet werden, um eine Faserfraktion zu gewinnen.

## Claims

1. A method of obtaining an oil fraction and a protein fraction from a vegetable starting substance, comprising the steps:
- extracting the starting substance which has been reduced in size with alcohol, the alcohol content in the extraction being at least 60 %, and separating an alcohol liquid phase from the extracted starting substance;
- processing the alcohol liquid phase by distilling the alcohol off to obtain an oil fraction;
- avoiding drying of the alcohol-wet extracted starting substance directly after the alcohol-extraction;
- transferring the still alcohol-wet extracted starting substance into an aqueous suspension to reduce the alcohol content of the extracted starting substance below 5 %; and
- processing the aqueous suspension by alkaline extraction to obtain the protein fraction.

2. The method of claim 1, **characterized in that** the starting substance is reduced in size to flour having particle sizes in the range of 10 to 250 µm, preferably from 50 to 150 µm.

3. The method according to any of the claims 1 and 2, **characterized in that** the starting substance is alcohol-extracted with isopropanol.

4. The method according to any of the claims 1 to 3, **characterized in that** the starting substance is alcohol-extracted at 40 to 70°C, preferably at 50 to 60 °C.

5. The method according to any of the claims 1 to 4, **characterized in that** the alcohol content in the extraction is more than 80 %.

6. The method according to any of the claims 1 to 5, **characterized in that** the extracted starting substance is washed with water, until its alcohol content is less than 2 %, preferably less than 1 %.

7. The method according to any of the claims 1 to 6, **characterized in that** the pH in reducing the alcohol content of the extracted starting substance with water is at the isoelectric point of the protein fraction, particularly between 4 and 5.

8. The method according to any of the claims 1 to 7, **characterized in that** the starting substance which has been reduced in its alcohol content is treated with alkali, preferably at a pH in the range of 9 to 10, and under homogenization of the starting substance.

9. The method according to any of the claims 1 to 8, **characterized in that** the starting substance which has been reduced in its alcohol content is dried, the starting substance which has been reduced in its alcohol content being neutralized and homogenized in an aqueous suspension prior to being dried.

10. The method according to any of the claims 1 to 8, **characterized in that**, the starting substance which has been reduced in its alcohol content is extracted with alkali, an alkaline liquid phase being separated from the remaining solids, and the alkaline liquid phase being processed to obtain the protein fraction, the remaining solids being processed to obtain a fiber fraction.

## Revendications

1. Procédé d'obtention d'une fraction lipidique et d'une fraction protéique à partir d'une substance végétale initiale, comprenant les étapes suivantes :
- extraction de la substance initiale broyée avec de l'alcool, la teneur en alcool étant au moins de 60 % à l'extraction, et séparation d'une phase liquide alcoolique de la substance initiale extraite ;
- traitement de la phase liquide alcoolique par distillation de l'alcool, pour obtenir la fraction lipidique ;
- évitement d'un séchage de la substance initiale extraite imbibée d'alcool, directement consécutif à l'extraction alcoolique ;
- ajout de la substance initiale extraite encore imbibée d'alcool à une suspension aqueuse, pour réduire la teneur en alcool de la substance initiale extraite à moins de 5 % ; et
- traitement de la suspension aqueuse par extraction alcoolique, pour obtenir la fraction protéique.

2. Procédé selon la revendication 1, **caractérisé en ce que** la substance initiale est broyée en farine ayant une distribution granulométrique comprise entre 10 et 250 µm, de préférence entre 50 et 150 µm.

3. Procédé selon l'une des revendications 1 et 2, **caractérisé en ce que** l'isopropanol est utilisé pour l'extraction alcoolique de la substance initiale.

4. Procédé selon l'une des revendications 1 à 3, **caractérisé en ce que** l'extraction alcoolique de la substance initiale est effectuée entre 40 et 70° C, de préférence entre 50 et 60° C.

5. Procédé selon l'une des revendications 1 à 4, **caractérisé en ce que** la teneur en alcool à l'extraction est supérieure à 80 %.

6. Procédé selon l'une des revendications 1 à 5, **caractérisé en ce que** la substance initiale extraite est lavée à l'eau jusqu'à ce que sa teneur en alcool soit inférieure à 2 %, de préférence inférieure à 1 %.

7. Procédé selon l'une des revendications 1 à 6, **caractérisé en ce qu'**à la réduction avec de l'eau de la teneur en alcool de la substance initiale extraite, la valeur pH se situe au point isoélectrique de la fraction protéique, en particulier entre 4 et 5.

8. Procédé selon l'une des revendications 1 à 7, **caractérisé en ce que** la substance initiale à teneur en alcool réduite est soumise à un traitement alcalin, de préférence avec une valeur pH comprise entre 9 et 10, la substance initiale étant homogénéisée.

9. Procédé selon l'une des revendications 1 à 8, **caractérisé en ce que** la substance initiale à teneur en alcool réduite est séchée, ladite substance initiale à teneur en alcool réduite étant neutralisée et homogénéisée en suspension aqueuse avant son séchage.

10. Procédé selon l'une des revendications 1 à 8, **caractérisé en ce que** la substance initiale à teneur en alcool réduite est soumise à une extraction alcaline, une phase liquide alcaline étant séparée d'un extrait sec résiduel, ladite phase liquide alcaline étant traitée pour obtenir la fraction protéique, l'extrait sec résiduel étant notamment traité pour obtenir une fraction fibreuse.
